# EUROPÄISCHE PATENTSCHRIFT

(11) **EP 0 920 722 B1**
(45) Veröffentlichungstag und Bekanntmachung des Hinweises auf die Patenterteilung: **13.02.2008**
(21) Anmeldenummer: 98924037.9
(22) Anmeldetag: 21.03.1998
(51) Int. Cl.: H02J 7/24

(54) **GENERATORREGLER**
GENERATOR CONTROL SYSTEM
SYSTEME REGULATEUR D'UN GENERATEUR

(30) Priorität: 30.06.1997 DE 19727876
(43) Veröffentlichungstag der Anmeldung: 09.06.1999
(73) Patentinhaber: ROBERT BOSCH GMBH, 70442 Stuttgart (DE)
(72) Erfinder: KOSS, Thomas, D-72760 Reutlingen (DE); FIEDLER, Gerhard, D-72666 Neckartailfingen (DE); NASSWETTER, Guenter, D-72810 Gomaringen (DE); REISZ, Egon, D-72770 Reutlingen (DE)
(86) Internationale Anmeldenummer: PCT/DE1998/000835
(87) Internationale Veröffentlichungsnummer: WO 1999/001920

(56) Entgegenhaltungen:
- EP-A- 0 339 576

## Beschreibung

Die Erfindung betrifft einen Generatorregler, insbesondere zum Regeln einer Bordspannung in Kraftfahrzeugen, der eine Ausgangsspannung eines Generators regelt und einen über eine Erregerwicklung des Generators fließenden Erregerstrom beeinflußt.

### Stand der Technik

Aus der DE 34 02 288 A1 ist ein Generator für Fahrzeuge mit einem zu einer Steuereinrichtung gehörenden Spannungsregler bekannt. Der dort beschriebene Spannungsregler mißt einen Spannungs-Ist-Wert (Ausgangsspannung) des Generators und vergleicht diesen mit einem intern gebildeten Sollwert. Entsprechend des Vergleichs wird der Erregerwicklung des Generators über eine Transistor-Leistungsendstufe ein getakteter Erregerstrom zugeführt.

### Vorteile der Erfindung

Der erfindungsgemäße Generatorregler mit den im Anspruch 1 genannten Merkmalen bietet den Vorteil, daß die die Erregerwicklung ansteuernde Transistor-Leistungsendstufe im Kurzschlußfall und bei Betrieb mit niederohmigen Lasten vor Überlastung geschützt ist. Dadurch, daß eine Sättigungsspannung einer die Erregerwicklung ansteuernden Transistor-Leistungsendstufe mit einer Referenzspannung verglichen wird, und in Abhängigkeit des Ergebnisses des Vergleichs der Erregerstrom pulsweitenmoduliert wird, können vorteilhafterweise sich einstellende Unterschiede einer Leistungsfähigkeit der Transistor-Leistungsendstufe durch Regelung des Erregerstromes eliminiert und eine Verlustleistung der Transistor-Leistungsendstufe begrenzt werden.

Vorteilhafte Ausgestaltungen der Erfindung ergeben sich aus den übrigen, in den Unteransprüchen genannten Merkmalen.

### Zeichnung

Die Erfindung wird nachfolgend in einem Ausführungsbeispiel anhand der zugehörigen Zeichnung, die eine Schaltungsanordnung eines Spannungsreglers eines Generators zeigt, näher erläutert.

### Beschreibung des Ausführungsbeispiels

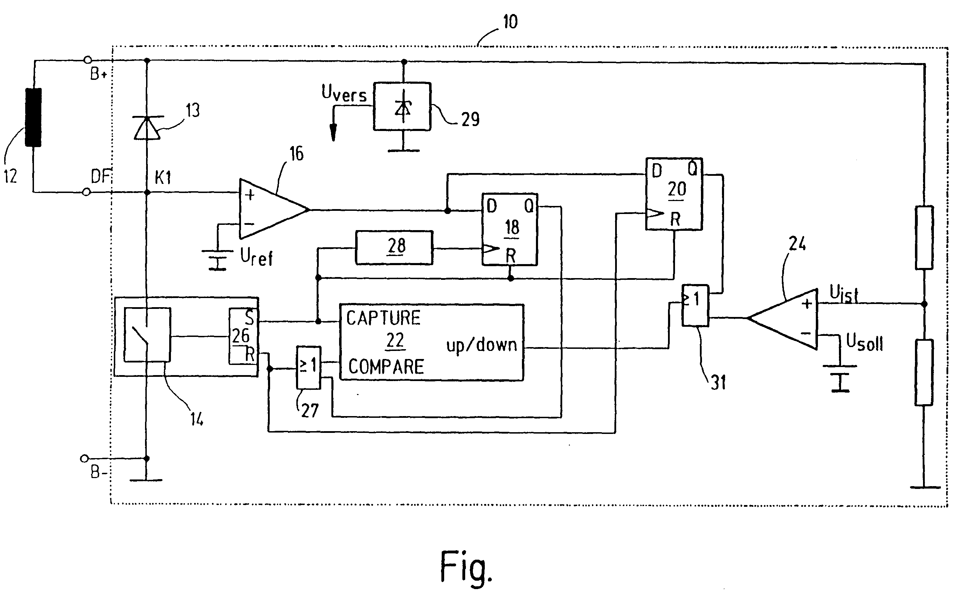

In der Figur ist die Schaltungsanordnung eines Spannungsreglers 10 eines im einzelnen nicht dargestellten Generators zum Erzeugen einer Bordspannung eines Kraftfahrzeuges gezeigt. Der Spannungsregler 10 besitzt die Außenanschlüsse B+, DF und B-. An die Außenanschlüsse B+ und DF ist eine Erregerwicklung 12 des Generators geschaltet. Parallel zur Erregerwicklung 12 ist eine Freilaufdiode 13 geschaltet, die beim Abschalten der induktiven Last der Erregerwicklung 12 einen Freilaufstrom aufnimmt. Angesteuert wird die Erregerwicklung 12 über eine Transistor-Leistungsendstufe 14, die beispielsweise von einer Darlington-Schaltung gebildet sein kann. Die Transistor-Leistungsendstufe 14 verbindet im eingeschalteten Zustand den Anschluß DF mit dem Anschluß B-, also mit Masse. Bei geschlossener Transistor-Leistungsendstufe 14 fließt ein Erregerstrom über die Erregerwicklung 12, so daß in bekannter Weise ein Magnetfeld erzeugt wird, das in der nicht dargestellten Generatorwicklung eine Spannung induziert.

Ein Knoten K1 ist mit einem ersten Eingang eines Komparators 16 verbunden, an dessen zweitem Eingang eine Referenzspannung U_{REF} anliegt. Der Ausgang des Komparators 16 ist mit Eingängen eines ersten Flip-Flop 18 und eines zweiten Flip-Flop 20 verbunden. Ein Ausgang des ersten Flip-Flop 18 ist mit einem Eingang eines ODER-Gatters 27 verbunden.Der Ausgang dieses ODER-Gatters ist mit einem Setzeingang des zweiten Flip-Flop 20 verbunden. Der Ausgang des zweiten Flip-Flop 20 ist mit einem Eingang eines ODER-Gatters 31 verbunden, dessen Ausgang mit einem Regelanschluß up/down einer Pulsweiten-Modulationsschaltung 22 verbunden ist. Ein zweiter Eingang des ODER-Gatters 31 ist mit dem Ausgang eines Komparators 24 verbunden, an dessen einem Eingang eine Ist-Spannung U_{IST} der Anschlußklemme B+ und an dessen anderem Anschluß eine Spannung U_{SOLL} der Anschlußklemme B+ anliegt.

Ein Startausgang Capture der Pulsweiten-Modulationsschaltung 22 ist mit einem Setzeingang S und ein Ausgang "Compare" der Pulsweiten-Modulationsschaltung 22 mit einem anderen Eingang des ODER-Gatters 27 verbunden. Der Ausgang dieses ODER-Gatters 27 ist mit dem Reset-Eingang R eines Flip-Flop 26 verbunden. Der Ausgang des Flip-Flop 26 ist mit einem Steueranschluß der Transistor-Leistungsendstufe 14 verbunden. Der Startausgang Capture der Pulsweiten-Modulationsschaltung 22 ist ferner mit einem Verzögerungsglied 28 verbunden, das an einen Setzeingang des Flip-Flop 18 angeschlossen ist. Ferner ist der Anschluß Capture mit Rücksetzeingängen der Flip-Flops 18 und 20 verbunden. Mit 29 ist ein Versorgungsspannungsmodul bezeichnet, das eine Versorgungsspannung U_{VERS} der Schaltungsanordnung 10 bereitstellt. Die Versorgungsspannung U_{VERS} ist über eine Zenerdiode stabilisiert.

Die in der Figur gezeigte Schaltungsanordnung übt folgende Funktion aus:

Während des Betriebes der Erregerwicklung 12 wird am Knoten K1 die Sättigungsspannung der Transistor-Leistungsendstufe 14 gemessen. Über den Komparator 16 wird diese mit einer Referenzspannung U_{REF} verglichen. Überschreitet die Sättigungsspannung die Referenzspannung U_{REF} während der Einschaltzeit der Transistor-Leistungsendstufe 14 wird die Pulsweite, mit der die Transistor-Leistungsendstufe 14 angesteuert wird, während der nächsten Periode (Schaltperiode) verringert. Dies geschieht, in dem das Ausgangssignal des Komparators 16 auf das zweite Flip-Flop 20 gelegt ist, so daß über ein anliegendes Eingangssignal am Flip-Flop 20 dieser triggert und das am Ausgang Q anliegende Signal den Steueranschluß up/down der Pulsweiten-Modulationsschaltung 22 ansteuert. Hierdurch wird eine Pulsweite des Erregerstroms über ein entsprechend getaktetes Schalten der Transistor-Leistungsendstufe 14 eingestellt. Überschreitet die Sättigungsspannung der Transistor-Leistungsendstufe 14 die Referenzspannung U_{REF} wird das Pulsweitenverhältnis über die Pulsweiten-Modulationsschaltung 22 entsprechend verringert. Die sich hierauf einstellende Sättigungsspannung wird während der nächsten Schaltperiode erneut über den Komparator 16 mit der Referenzspannung U_{REF} verglichen, so daß gegebenenfalls ein erneutes Verändern des Pulsweitenverhältnisses erfolgen kann. Dieser Vorgang wiederholt sich so oft, bis über die Einstellung des Pulsweitenverhältnisses während des Erregerstromes die Ausgangsspannung des Generators auf einen festgelegten Wert eingeregelt ist. Der Maximalwert der Referenzspannung U_{REF}, über dessen Verhältnis zur Sättigungsspannung der Transistor-Leistungsendstufe 14 letztendlich das Pulsweitenverhältnis des Erregerstromes bestimmt wird, ist so festgelegt, daß über alle Prozeßstreuungen hinweg ein kontinuierlicher Betrieb mit einer hierbei auftretenden Verlustleistung von der Transistor-Leistungsendstufe 14 schadlos überstanden werden kann.

Über das Verzögerungsglied 28, das mit einer einstellbaren Verzögerungszeit den Setzeingang des Flip-Flop 18 ansteuert, wird der tatsächliche Erregerstrom nach Ablauf der über das Verzögerungsglied 28 eingestellten Verzögerungszeit ermittelt, um einen infolge eines Kurzschlusses erfolgenden Anstieg des Erregerstroms zu erfassen. Im Falle eines Kurzschlusses zwischen den Anschlüssen DF und B+ würde der Erregerstrom durch die Transistor-Leistungsendstufe 14 innerhalb der normalen Einschaltzeit so stark ansteigen, daß eine Zerstörung der Transistor-Leistungsendstufe 14 unumgänglich wäre. Die Abtastung des Ausganges des Komparators 16 mittels des Flip-Flop 18 und der über das Verzögerungsglied 28 eingestellten Verzögerungszeit, nach Einschalten der Transistor-Leistungsendstufe 14, erfolgt deshalb innerhalb einer sehr kurzen Zeit nach dem Einschalten der Transistor-Leistungsendstufe 14. Ist bereits zu diesem durch die Verzögerungszeit bestimmten Zeitpunkt die Referenzspannung U_{REF} durch die Sättigungsspannung überschritten, wird die Transistor-Leistungsendstufe 14 sofort abgeschaltet und verbleibt für den Rest der Schaltperiode im ausgeschalteten Zustand. Das Abschalten erfolgt über den Ausgang des Flip-Flop 18, der über das ODER-Gatter 27 mit dem Reseteingang R des Flip-Flop 26 verbunden ist. Gleichzeitig erfolgt ein Setzen des Setzeinganges des Flip-Flop 20, so daß der Strom zum Abschaltzeitpunkt der Transistor-Leistungsendstufe erfaßt wird.

Dieser Vorgang wiederholt sich am Anfang jeder Schaltperiode der Transistor-Leistungsendstufe 14 solange, wie der Kurzschluß zwischen den Anschlüssen DF und B+ anliegt. Selbst ein dauernder Kurzschluß zwischen den Anschlüssen DF und B+ wird von der Transistor-Leistungsendstufe 14 schadlos überstanden, da die Verzögerungszeit über das Verzögerungsglied 28 entsprechend klein eingestellt ist.

Durch Setzen des Flip-Flop 20, zum Zeitpunkt des Kurzschlusses kann der Kurzschluß unabhängig von der eigentlichen Strombegrenzung des Erregerstromes angezeigt werden. Darüber hinaus ist durch Abfragen weiterer Schwellwerte der Sättigungsspannung der Transistor-Leistungsendstufe 14 über den Komparator 16 und/oder einen zusätzlichen Komparator die Ermittlung verschiedener Fehler in der Beschaltung an dem Anschluß DF möglich. So können beispielsweise Nebenschlüsse von dem Anschluß DF zu dem Anschluß B+ oder B- (in der Figur nicht dargestellter Generatoranschluß) und/oder ein Kurzschluß zwischen dem Anschluß DF und dem Anschluß B- ermittelt werden.

## Patentansprüche

1. Generatorregler für einen Generator, insbesondere zum Regeln einer Bordspannung in Kraftfahrzeugen, der eine Ausgangsspannung des Generators regelt, wobei ein über eine Erregerwicklung des Generators fließender Erregerstrom beeinflußt wird, **dadurch gekennzeichnet, daß** eine Sättigungsspannung einem die Erregerwicklung (12) ansteuernden Transistor-Leistungsendstufe (14) mit einer Referenzspannung (U_{REF}) verglichen wird, und in Abhängigkeit eines Ergebnisses des Vergleiches der Erregerstrom pulsweitenmoduliert wird.

2. Generatorregler nach Anspruch 1, **dadurch gekennzeichnet, daß** die Sättigungsspannung zu jeder sich aufgrund der Pulsweiten-Modulation ergebenden Schaltperiode der Transistor-Leistungsendstufe (14) erneut mit der Referenzspannung (U_{REF}) verglichen wird.

3. Generatorregler nach einem der vorhergehenden Ansprüche, **dadurch gekennzeichnet, daß** der Vergleich der Sättigungsspannung mit der Referenzspannung (U_{REF}) am Ende einer vorgebbaren Verzögerungszeit nach Einschalten der Transistor-Leistungsendstufe (14) erfolgt.

4. Generatorregler nach einem der vorhergehenden Ansprüche, **dadurch gekennzeichnet, daß** die Verzögerungszeit durch ein einstellbares Verzögerungsglied (28) vorgebbar ist, das ein Flip-Flop (18) triggert, dessen Eingang mit einem die Sättigungsspannung mit der Referenzspannung (U_{REF}) vergleichenden Komparator (16) verbunden ist, und dessen Ausgang mit einem Reseteingang (R) eines die Transistor-Leistungsendstufe (14) abschaltenden Flip-Flop (26) verbunden ist.

5. Generatorregler nach Anspruch 4, **dadurch gekennzeichnet, daß** bei Überschreiten der Referenzspannung (U_{REF}) durch die Sättigungsspannung zum Verzögerungszeitpunkt, die Transistor-Leistungsendstufe (14) für den Rest der aktuellen Schaltperiode ausgeschaltet bleibt.

6. Generatorregler nach einem der vorhergehenden Ansprüche, **dadurch gekennzeichnet, daß** die Verzögerungszeit des Verzögerungsgliedes (28) so gewählt ist, daß auch bei dauerndem Kurzschluß über der Erregerwicklung (12) ein wiederholtes kurzzeitiges Einschalten der Transistor-Leistungsendstufe (14) von dieser schadlos überstanden wird.

7. Generatorregler nach einem der vorhergehenden Ansprüche, **dadurch gekennzeichnet, daß** ein Überschreiten der Referenzspannung (U_{REF}) durch die Sättigungsspannung nach Ablauf der Verzögerungszeit innerhalb der aktuellen Schaltperiode eine sofortige Abschaltung der Transistor-Leistungsendstufe (14) auslöst.

8. Generatorregler nach einem der vorhergehenden Ansprüche, **dadurch gekennzeichnet, daß** bei Überschreiten der Referenzspannung (U_{REF}) durch die Sättigungsspannung während der Schaltperiode der Transistor-Leistungsendstufe (14) die Pulsweite während der nächsten Schaltperiode verringert wird.

## Claims

1. Generator controller for a generator, in particular for controlling an on-board voltage in motor vehicles, which controls an output voltage of the generator, with a field current which flows across a field winding of the generator being influenced, **characterized in that** a saturation voltage of a transistor power output stage (14) which actuates the field winding (12) is compared with a reference voltage (U_{REF}), and the field current is pulse-width-modulated as a function of a result of the comparison.

2. Generator controller according to Claim 1, **characterized in that** the saturation voltage is again compared with the reference voltage (U_{REF}) for each switching period, which is produced on account of the pulse width modulation, of the transistor power output stage (14).

3. Generator controller according to either of the preceding claims, **characterized in that** the saturation voltage is compared with the reference voltage (U_{REF}) at the end of a prescribable delay time after the transistor power output stage (14) is switched on.

4. Generator controller according to one of the preceding claims, **characterized in that** the delay time can be prescribed by a settable delay element (28) which triggers a flip-flop (18) whose input is connected to a comparator (16) which compares the saturation voltage with the reference voltage (U_{REF}) and whose output is connected to a reset input (R) of a flip-flop (26) which switches off the transistor power output stage (14).

5. Generator controller according to Claim 4, **characterized in that** when the reference voltage (U_{REF}) is exceeded by the saturation voltage at the delay time, the transistor power output stage (14) remains switched off for the remainder of the current switching period.

6. Generator controller according to one of the preceding claims, **characterized in that** the delay time of the delay element (28) is selected such that repeated brief switching on of the transistor power output stage (14) is withstood by the said transistor power output stage without damage, even in the event of a continued short circuit across the field winding (12).

7. Generator controller according to one of the preceding claims, **characterized in that** the situation of the reference voltage (U_{REF}) being exceeded by the saturation voltage after the delay time within the current switching period has elapsed causes the transistor power output stage (14) to be immediately switched off.

8. Generator controller according to one of the preceding claims, **characterized in that** when the reference voltage (U_{REF}) is exceeded by the saturation voltage during the switching period of the transistor power output stage (14), the pulse width is reduced during the next switching period.

## Revendications

1. Régulateur de générateur pour un générateur, notamment pour réguler la tension du réseau embarqué dans des véhicules automobiles, qui régule la tension de sortie du générateur, en influençant le courant d'excitation dans l'enroulement d'excitation du générateur,
**caractérisé en ce qu'**
on compare une tension de saturation d'un étage de puissance à transistors (14) commandant l'enroulement d'excitation (12) à une tension de référence (U_{REF}) et en fonction du résultat de la comparaison, on module le courant d'excitation par modulation de largeur d'impulsion.

2. Régulateur de générateur selon la revendication 1,
**caractérisé en ce qu'**
on compare à nouveau la tension de saturation à chaque période de commutation de l'étage de puissance à transistors (14), période de commutation résultant de la modulation de largeur d'impulsion, en comparant la tension de saturation à la tension de référence (U_{REF}).

3. Régulateur de générateur selon l'une des revendications précédentes,
**caractérisé en ce que**
la comparaison de la tension de saturation avec la tension de référence (U_{REF}) se fait à la fin d'une période de temporisation prédéfinie qui fait suite au branchement de l'étage de puissance à transistors (14).

4. Régulateur de générateur selon l'une des revendications précédentes,
**caractérisé en ce que**
la durée de temporisation est prédéfinie par un élément de temporisation (28) réglable qui déclenche une bascule bistable (Flip-Flop) (18) dont l'entrée est reliée à un comparateur (16) qui compare la tension de saturation à la tension de référence (U_{REF}) et dont la sortie est reliée à une entrée de remise à l'état initial (R) d'une bascule bistable (Flip-Flop) (26) coupant l'étage de puissance à transistors (14).

5. Régulateur de générateur selon la revendication 4,
**caractérisé en ce qu'**
en cas de dépassement de la tension de référence (U_{REF}) par la tension de saturation à l'instant de la temporisation, l'étage de puissance à transistors (14) est coupé pour le restant de la période de commutation actuelle.

6. Régulateur de générateur selon l'une des revendications précédentes,
**caractérisé en ce que**
la durée de temporisation de l'élément de temporisation (28) est choisie pour que même en cas de court-circuit permanent par l'enroulement d'excitation (12), celui-ci résiste sans dommages à un bref branchement répété de l'étage de puissance à transistors (14).

7. Régulateur de générateur selon l'une des revendications précédentes,
**caractérisé en ce qu'**
un dépassement de la tension de référence (U_{REF}) par la tension de saturation à la fin de la période de temporisation au cours de la période de commutation actuelle, déclenche une coupure immédiate de l'étage de puissance à transistors (14).

8. Régulateur de générateur selon l'une des revendications précédentes,
**caractérisé en ce qu'**
en cas de dépassement de la tension de référence (U_{REF}) par la tension de saturation pendant la période de commutation de l'étage de puissance à transistors (14), on diminue la largeur d'impulsion au cours de la période de commutation suivante.
